# EUROPEAN PATENT APPLICATION

(11) **EP 4 563 948 A1**
(43) Date of publication of application: **04.06.2025**
(21) Application number: 23212859.5
(22) Date of filing: 29.11.2023
(51) Int. Cl.: G01D 9/00, G06K 19/02, G06K 19/04, G06K 19/067

(54) **A METHOD OF MANUFACTURING A LOGGER DEVICE CONFIGURED TO TRACK AN ASSET ON A PACKAGE OR A UNIT LEVEL IN A SUPPLY CHAIN**

(71) Applicant: Controlant hf., 201 Kopavogur (IS)
(72) Inventor: HERJOLFSSON, Gisli, 201 Kopavogur (IS); BRYNJULFSSON, Erlingur, 201 Kopavogur (IS)
(74) Representative: Inspicos P/S

(57) **Abstract**

This invention relates to method of manufacturing a logger device (100), and a logger device configured to track the location of an asset (510) contained within a package (512, 513) while the asset is transported from a beginning location to a destination location, the manufacturing process comprises:
• providing a rectangular housing (102, 205) of an elastically deformable material having a thickness being insignificant relative to a length of the housing,
• arranging electrically connected components (202) including a communication module, a power source, and a processor for controlling the communication module and the power source such that it is carried by the housing,
• wrapping the housing and the electrically connected components with an outer layer of a sheet material (310, 301) to enclose outer surfaces of the housing,
wherein the wrapping includes wrapping the sheet material at least partly longitudinally or transversally around the housing such that the sheet material forms at least one rounded edge (101) extending along one of the longitudinal sides or along one of the transversal sides.

## Description

### FIELD OF THE INVENTION

The present invention relates to a method of manufacturing a logger device configured to track the location of an asset contained within a package while the asset is transported from a beginning location to a destination location. The present invention further relates to a logger device for tracking an asset on a box or unit level in a supply chain.

### BACKGROUND OF THE INVENTION

With the expansion and growth of global sourcing in a supply chain, more prevalent interest has been placed on automatic electronic time and monitoring of environment related parameters to increase food and drug safety and improve food defense systems throughout all areas of production, processing, storage and transportation and operations. Food and drug require proper handling of environment related parameters such as temperature during transport to assure shelf quality, longevity, and safety.

Logger devices are electronic monitoring devices commonly used for these purposes, namely, to be associated to assets such as food, beverages or pharmaceutical products to automatically monitor and record various environmental related parameters of the assets throughout a supply chain, such as temperature, humidity, acceleration, and air pressure, over time. A recent example of importance of such logger devices is the temperature monitoring of the COVID-19 vaccines, which is a key critical monitoring parameter.

Logger devices used for real time monitoring have a wireless communication module to allow them to transmit position data of the logger devices commonly also together with measured environmental related data for the asset wirelessly and, in that way, enable a real time supply chain monitoring during the transport of the assets. This means that position data of the logger device (and thus of the asset) together with measured environmental data such as the temperature of the assets are provided in real time. By doing so, it is possible to monitor the position and the environmental condition of the assets in real time. Thus, issues such as too high or low temperature of the assets may be identified before these issues escalate which allows for proactive actions to prevent the assets from being damaged.

The supply chain contains different transport legs, such as a primary transport leg where a primary distribution from manufacturing facility to regional distribution site takes place, a secondary transport leg where secondary distribution from the regional distribution site to e.g. local market distribution takes place, and last mile transport leg where last mile distribution from the regional distribution to pharmacies, hospitals or direct to patient takes place.

Tracking on the shipment level, e.g. said container or pallet level, makes all tracking later in the supply chain difficult, and in some cases impossible, when the container is split into pallet levels, and the pallets are divided into package levels etc.. This lack of visibility in e.g. temperature tracking causes a risk of sensitive products (assets) being destroyed during the transport in the supply chain, in particularly in the secondary transport leg, and last mile transport leg, where the tracking is often based on estimations which obviously is not a favourable way of tracking sensitive assets such as pharmaceutical products.

### SUMMARY OF THE INVENTION

It is an object of the invention solve the above-mentioned problems by manufacturing and provide a logger device which has the dimension and capability of enabling a unit level tracking down to a package level when tracking assets in a supply chain, where the logger device on a regular basis transmits location data of the logger device and thus the asset to an external control computer, and thus enable a real time position tracking.

In general, the invention preferably seeks to mitigate, alleviate or eliminate one or more of the above-mentioned disadvantages of the prior art singly or in any combination. In particular, it may be seen as an object of embodiments of the present invention to provide a method and a system that solves the above-mentioned problems, or other problems.

To better address one or more of these concerns, in a first aspect a method is provided manufacturing a logger device configured to track the location of an asset contained within a package while the asset is transported from a beginning location to a destination location, the manufacturing process comprises:
- providing a rectangular housing of elastically deformable material having a thickness being insignificant relative to a length of the housing,
- arranging electrically connected components including a communication module, a power source, and a processor for controlling the communication module and the power source such that it is carried by the housing,
- wrapping the housing and the electrically connected components with an outer
layer of a sheet material to at least partly enclose an outer surfaces of the housing, wherein the wrapping includes wrapping the sheet material at least partly longitudinally or transversally around the housing such that the sheet material forms at least one rounded edge extending along one of the longitudinal sides or along one of the transversal sides.

In case e.g. the wrapping is around the longitudinal side, the width of the outer layer is preferably essentially the same as the width of housing material.

Accordingly, a simple manufacturing method is provided to manufacture highly advanced logger device, which may be referred to as a smart label, IoT label, logger device-card, which may be inserted into package level, which may be the smallest packing level. Due to how thin the logger device is, it may in many cases be bendable which may facilitate placing it into the packaging material carrying the asset.

In an embodiment, the outer layer has a width which is essentially the same as the shortest distance between the longitudinal sides or the shortest distance between the transversal sides of the housing material. The outer layer may in another embodiment have a length which is larger than the shortest distance between the longitudinal sides or the shortest distance between the transversal sides of the housing material.

In an embodiment, the housing has a hollow section and a continuous outer frame section extending around the hollow section, wherein the power source comprises a bendable battery which is placed within the hollow section and where the processor and the communication module are arranged on a Printed Circuit Board (PCB) placed onto the continuous outer frame section prior to the wrapping.

In an embodiment, the electrically connected components further comprises a light source and a light detector arranged on the PCB, wherein in inner side of the outer frame comprises an inwardly extending protrusion portion extending between the light source and the light detector when the PCB is placed onto the continuous frame section with the light source and the light detector facing inwards into the hollow section of the housing. This is to enable detecting if the package has been opened or not. Moreover, the protrusion portion ensures a fully coverage and ensures no light "pollution" between the light source and the light detector, i.e. ensures that the only detected light is ambience light and not a light directly from the light source.

In an embodiment, the electrically connected components further comprises at least one measuring device arranged on the PCB for measuring at least one environmental related parameter of the asset. This may as an example include a temperature sensor, a humidity sensor, an air pressure sensor, a tilting sensor, for monitoring in real time the environment condition of the asset during the transport.

The elastically deformable material of the housing is Polyethylene terephthalate (PET) plastic material, or any other type of plastic material or material that has low electrical conductivity.

The housing may have a thickness in a direction perpendicular to the longitudinal sides and perpendicular to the transversal sides, the thickness being between 1-5mm, preferably between 2-4mm, more preferably around 3mm. The longitudinal sides may have a length between 60-100mm, more preferably between 75-85mm, and/or the transversal sides have a length between 40-50mm. Thus, a highly compact logger device is provided.

According to a second aspect, a logger device is provided configured to at least track the location of an asset contained within a package while the asset is being transported from a beginning location to a destination location, comprising:
- a deformable rectangular housing having longitudinal sides being spaced apart by a distance being insignificant relative to a length of a longitudinal side of the housing,
- electrically connected components including a communication module, a power source, and a processor for controlling the communication module and the power source being carried by the housing, and
- an outer layer of a sheet material wrapped at least partly around the housing and the electrically connected components, the outer layer covering the longitudinal sides or the transversal sides of the housing and forming at least one rounded edge along the longitudinal side or the transversal side.

The electrically connected components are partly attached to an outer surface of the housing material, or incorporated into the housing material, or at least partly placed within a hollow section of the housing, and where the processor and the communication module may be arranged on a Printed Circuit Board (PCB) and where the power source comprises a bendable battery such as a zinc-core battery electrically connected to the PCB. The electrically connected components may further include a light source and a light detector arranged on the PCB, wherein the housing comprises a hollow section and an outer frame, where an inner side of the outer frame comprises an inwardly extending protrusion portion extending between the light source and the light detector, wherein the light source and the light detector faces inwards into the hollow section, where the outer layer at the opposite surface side comprises one or more window sections placed above and in vertical plane relative to the light source and the light detector.

The logger device is configured to interact with a propelling device in a way that when propelling the logger device into an opening of a product package one of the rounded edged ends is facing the opening. To further facilitate this, the edges of the logger device are rounded to ensure a smooth propelling into the product package.

In a third aspect, the present invention relates to a product package comprising the above-mentioned logger device. The asset may as an example comprise a pharmaceutical product, a food product, a beverage or any other type of sensitive material.

In a fourth aspect, the present invention relates to a system comprising the above mentioned logger device and a propelling device configured to insert the logger device into a product package, where the propelling device comprises a holder configured to hold the logger device in an orientation such that the rounded edge of the outer layer faces an opening of the product package, and for moving the logger device into the product package in this orientation.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 shows a logger device configured to at least track the location of an asset contained within a package while the asset is being transported from a beginning location to a destination location within a supply chain,
Figures 2 and 3 show a logger device according to the present invention, where figure 2 shows an example of a rectangular housing of an elastically deformable material as discussed in relation to figure 1,
Figure 4 depicts a cross sectional view of the logger device showing two rounded edges 101a,b, and three bendable batteries 201a,b,c, and
Figure 5 shows a system according to the present invention comprising the logger device.

### DESCRIPTION OF EMBODIMENTS

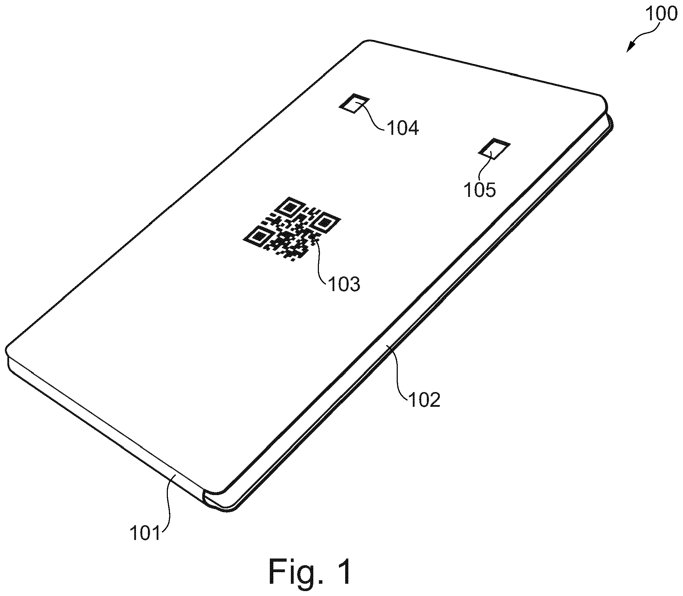

Figure 1 shows a logger device configured to at least track the location of an asset contained within a package while the asset is being transported from a beginning location to a destination location within a supply chain. The logger device comprises an elastically deformable material 102 having a thickness being insignificant relative to a length of the housing, and electrically connected components (not shown here) including a communication module, a power source, a memory and a processor for controlling the communication module and the power source being carried by the housing. Such a logger device may also be understood as a IoT label, smart-card-label or card-label, where the logger device may be bendable or deformable to facilitate the placement of the logger device within packing material containing the asset.

To enable detecting when the package is opened, which may indicate a point of consumption, the logger device further comprises a light source such as LED and a light sensor (not shown), arranged on or within the elastically deformable material 102. The two windows 104, 105 are placed directly above the light source and the light detector to provide access of the light source out of the logger device and into the light detector.

An outer layer of a sheet material wrapped is at least partly around the housing and the electrically connected components such that the outer layer covers at least partly the longitudinal sides or the transversal sides of the housing and forming such that at least one rounded edge 101 is formed along the longitudinal side.

The upper surface side comprises a unique ID, or a QR code 103 for uniquely identifying the logger device.

As shown here, the thickness of the housing 102 in insignificant relative to the length of the logger device 100, where the the thickness may be between 1-5mm, preferably between 2-4mm, more preferably around 3mm.

The longitudinal sides have a length between 60-100mm, more preferably between 75-85mm, and/or the transversal sides have a length between 40-50mm.

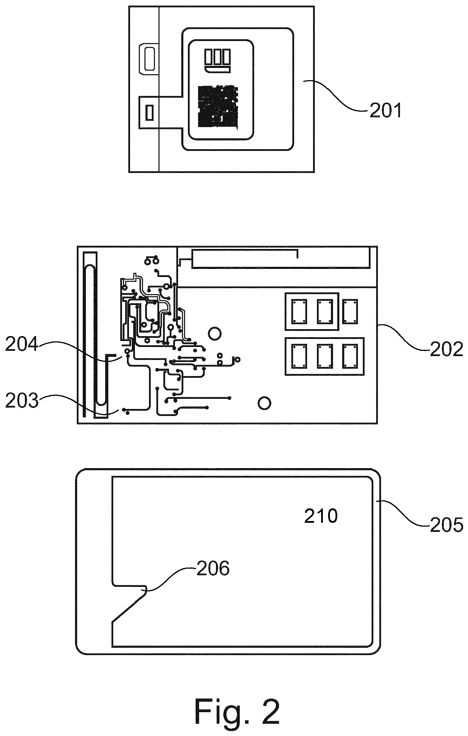

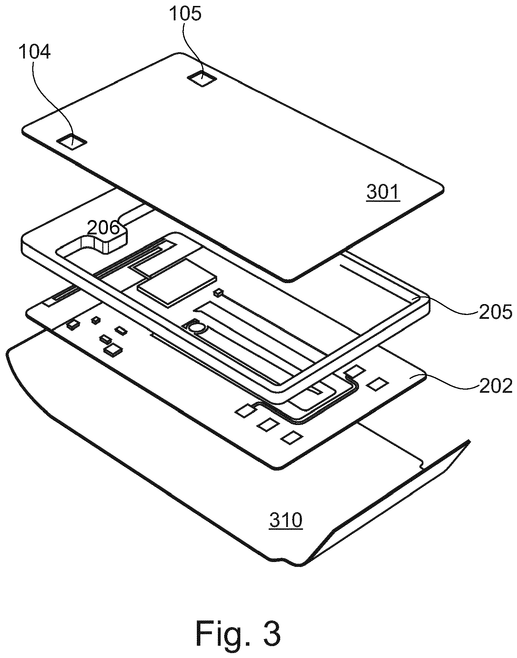

Figures 2 and 3 show a logger device according to the present invention, where figure 2 shows an example of a rectangular housing of an elastically deformable material as discussed in relation to figure 1, wherein the housing shown here comprises a hollow section 210 and a continuous outer frame section 205 extending around the hollow section.

The power source 201 shown here is a bendable battery which is within a millimetre range or even less that a millimetre in thickness, which may be placed within the hollow section 210 and where the processor and the communication module are arranged on a Printed Circuit Board (PCB) 202.

In the embodiment shown here the electrically connected components further comprises a light source 203 and a light detector 204 arranged on the PCB 202.

Shown is also a protrusion portion 206 extending from an inner side of the frame 205 towards the hollow area positioned between the light source and the light detector when the PCB is placed onto the continuous frame section with the light source and the light detector facing inwards into the hollow section of the housing. This is to prevent any light "pollution" within the logger device when the light source is emitting light out of the logger device, which could otherwise cause a false alarm.

Figure 3 depicts graphically on embodiment of a method of manufacturing a logger device discussed previously, configured to track the location of an asset contained within a package while the asset is transported from a beginning location to a destination location.

The housing 102, 205 and the electrically connected components 202, 201 are wrapped with an outer layer 310 of a sheet material to enclose outer surfaces of the housing, wherein the wrapping includes wrapping the sheet material at least partly longitudinally around the housing such that the sheet material forms said at least one rounded edge 101 extending along one or both ends of the longitudinal sides.

A separate sheet material 301 is placed on an opposition site 301 with said two windows 104, 105, but the sheet material could just as well be a single sheet material.

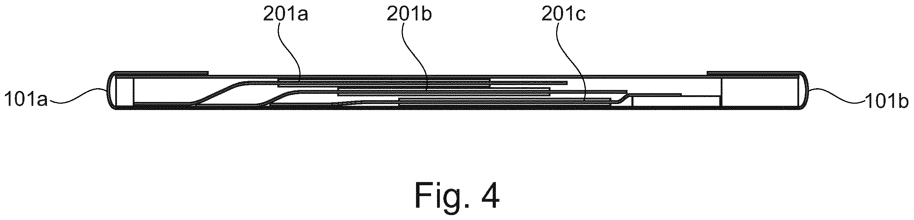

Figure 4 depicts a cross sectional view of the logger device showing two rounded edges 101a,b, and three bendable batteries 201a,b,c which may be zinc-core type. This is obviously simply to enhance the battery lifetime of the logger device.

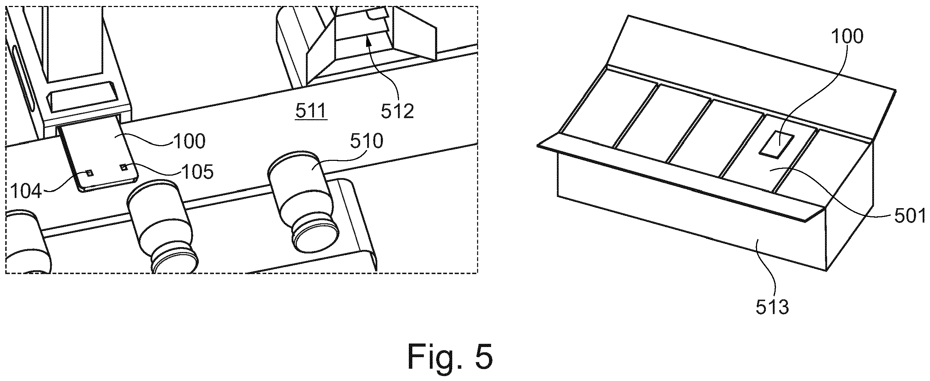

Figure 5 shows a system according to the present invention comprising the logger device 100 as discussed previously, an asset 510 which may be a pharmaceutical material of any type, an opening of a packaging material which as shown here is an open box, a propelling device (not shown) configured to propel the logger device into a product package 512.

As depicted here, the logger device 100 may be produced at the packaging facility or simple shipped to the packaging facility as a ready product. A conveyor 511 conveys the logger device towards the packaging material 512 with the rounded edge 101 facing the opening to ensure a smooth insert when the propelling device propels the logger device into the packaging material. This may either be done prior to placing the asset therein or after placing the asset 510 into the packaging material.

The right side on figure 5 shows another scenario where the logger device 100 is arranged within a larger packaging unit, a box unit 513 containing multiple of carton units 501, where unit level box tracking is possible.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of manufacturing a logger device (100) configured to track the location of an asset (510) contained within a package (512, 513) while the asset is transported from a beginning location to a destination location, the manufacturing process comprises:
• providing a rectangular housing (102, 205) of an elastically deformable material having a thickness being insignificant relative to a length of the housing,
• arranging electrically connected components (202) including a communication module, a power source, and a processor for controlling the communication module and the power source such that it is carried by the housing,
• wrapping the housing and the electrically connected components with an outer layer of a sheet material (310, 301) to enclose outer surfaces of the housing,
wherein the wrapping includes wrapping the sheet material at least partly longitudinally or transversally around the housing such that the sheet material forms at least one rounded edge (101) extending along one of the longitudinal sides or along one of the transversal sides.

2. The method according to claim 1, wherein the housing has a hollow section (210) and a continuous outer frame section (205) extending around the hollow section, wherein the power source comprises a bendable battery (201) which is placed within the hollow section and where the processor and the communication module are arranged on a Printed Circuit Board (PCB) (202) placed onto the continuous outer frame section prior to the wrapping.

3. The method according to claim 2, wherein the electrically connected components further comprises a light source and a light detector (203, 204) arranged on the PCB, wherein the inner side of the outer frame comprises an inwardly extending protrusion portion (206) extending between the light source and the light detector when the PCB is placed onto the continuous frame section with the light source and the light detector facing inwards into the hollow section of the housing.

4. The method according to claim 2 or 3, wherein the electrically connected components further comprises at least one measuring device arranged on the PCB for measuring at least one environmental related parameter of the asset.

5. The method according to any of the preceding claims, wherein the elastically deformable material of the housing is Polyethylene terephthalate (PET) plastic material.

6. The method according to any of the preceding claims, wherein the housing has a thickness in a direction perpendicular to the longitudinal sides and perpendicular to the transversal sides, the thickness being between 1-5mm, preferably between 2-4mm, more preferably around 3mm.

7. The method according to any of the preceding claims, wherein the longitudinal sides have a length between 60-100mm, more preferably between 75-85mm, and/or the transversal sides have a length between 40-50mm.

8. The method according to any of the preceding claims, wherein the rectangular housing is provided with rounded edges.

9. A logger device (100) configured to at least track the location of an asset contained within a package while the asset is being transported from a beginning location to a destination location, comprising:
• an elastically deformable material (102, 205) having a thickness being insignificant relative to a length of the housing,
• electrically connected components (202) including a communication module, a power source, and a processor for controlling the communication module and the power source being carried by the housing, and
• an outer layer of a sheet material (310, 301) wrapped at least partly around the housing and the electrically connected components, the outer layer covering at least partly the longitudinal sides or the transversal sides of the housing and forming at least one rounded edge (101) along the longitudinal side or the transversal side.

10. The logger device according to claim 9, wherein the electrically connected components are partly attached to an outer surface of the housing material, or incorporated into the housing material, or at least partly placed within a hollow section of the housing.

11. The logger device according to claim 9 or 10, wherein the processor and the communication module are arranged on a Printed Circuit Board (PCB) and where the power source comprises a bendable battery such as a zinc-core battery electrically connected to the PCB.

12. The logger device according to claim 11, wherein the electrically connected components further include a light source and a light detector arranged on the PCB, wherein the housing comprises a hollow section and an outer frame, the inner side of outer frame comprising an inwardly extending protrusion portion extending between the light source and the light detector, wherein the light source and the light detector faces inwards into the hollow section, where the outer layer at the opposite surface side comprises one or more window sections placed above and in vertical plane relative to the light source and the light detector.

13. The logger device according to any of the claims 9 to 12, wherein the logger device is configured to interact with a propelling device in a way that when propelling the logger device into an opening of a product package one of the rounded edged ends is facing the opening.

14. A product package containing an asset such as a pharmaceutical product arranged in the product package, wherein the product package comprises a logger device according to any of the claims 9 to 13.

15. A system comprising a logger device according to any of the claims 9 to 13 and a propelling device configured to insert the logger device into a product package, where the propelling device comprises a holder configured to hold the logger device in an orientation such that the rounded edge of the outer layer faces an opening of the product package, and for moving the logger device into the product package in this orientation.
